# EUROPEAN PATENT APPLICATION

(11) **EP 4 112 693 A1**
(43) Date of publication of application: **04.01.2023**
(21) Application number: 21760697.9
(22) Date of filing: 05.01.2021
(51) Int. Cl.: C09D 5/00, C09J 5/02, C09D 183/06, C08L 63/00, C08L 33/04

(54) **PRIMER COMPOSITION FOR GLASS ADHESIVE**

(30) Priority: 28.02.2020 KR 20200025098
(71) Applicant: KCC Corporation, Seoul 06608 (KR)
(72) Inventor: LEE, Jeong Hyun, Ulsan 44262 (KR)
(74) Representative: Gill, Siân Victoria
(86) International application number: PCT/KR2021/000062
(87) International publication number: WO 2021/172733

(57) **Abstract**

The present invention relates to a primer composition for a glass adhesive, the primer composition comprising a first silane polymer, a second silane polymer, an epoxy resin, and an acrylic polymer, wherein the first silane polymer has a weight average molecular weight smaller than that of the second silane polymer, and the composition comprises 10 to 60 parts by weight of the first silane polymer, 0.1 to 20 parts by weight of the second silane polymer, 0.1 to 10 parts by weight of the epoxy resin, and 5 to 30 parts by weight of the acrylic polymer.

## Description

### [Technical Field]

The present invention relates to a primer composition for a glass adhesive having excellent storage property and pot time, and excellent glass adhesiveness.

### [Background Art]

When bonding glass to the painting surface of a vehicle body, in order to prevent the glass from being pushed or detached from the painting surface due to insufficient adhesive force between the painting surface and the glass, it is, in general, common to apply a primer to the painting surface first, and then use a moisture hardening type adhesive on the primer. In this case, the moisture hardening type adhesive contains urethane resin which is a reactant of isocyanate and polyol as a resin component, and contains carbon black, calcium carbonate, etc. as a pigment component, and contains a plasticizer such as diisononyl phthalate (DINP). In addition, the conventional primer composition contains a film-forming agent such as an epoxy resin, a silane polymer, or an acrylic resin; and additives such as a pigment such as carbon black and an inorganic filler (for example, titanium oxide, calcium carbide and silicic acid anhydride, etc.).

However, the conventional primer composition has a problem of insufficient storage property due to additives such as a pigment or an inorganic filler, or a problem of insufficient storage stability due to the precipitation of the pigment or the inorganic filler. In order to solve this problem, it was common that the conventional primer composition contains a dispersant. However, the conventional primer composition containing a dispersant and a pigment or an inorganic filler requires an additional dispersion process, which has a limitation in lowering economic feasibility, and has limitations in that storage property and sedimentation problems occur due to a pigment or an inorganic filler.

As an alternative to this, Korean Laid-Open Patent Application No. 2017-0016433 (Patent Document 1) discloses a primer composition comprising an acrylic copolymer, a titanium compound, and a solvent. However, the composition of Patent Document 1 had poor adhesion due to lack of wettability with the ceramic coating surface of automobile glass, and had a problem in that water resistance and chemical resistance were inferior due to mono-silane and titanium compound.

Therefore, there is a need for research and development on a primer composition for a glass adhesive, which is excellent in workability because it is possible to secure pot time with excellent storage stability, and has excellent adhesive force with glass.

### [Disclosure]

### [Technical Problem]

Accordingly, it is an object of the present invention to provide a primer composition for a glass adhesive that is excellent in workability by securing pot time and is excellent in adhesive force with glass.

### [Technical Solution]

The present invention provides a primer composition for a glass adhesive comprising a first silane polymer, a second silane polymer, an epoxy resin and an acrylic polymer,
wherein the first silane polymer has a smaller weight average molecular weight than the second silane polymer, and
wherein the composition comprises 10 to 60 parts by weight of the first silane polymer, 0.1 to 20 parts by weight of the second silane polymer, 0.1 to 10 parts by weight of the epoxy resin and 5 to 30 parts by weight of the acrylic polymer.

### [Advantageous Effects]

The primer composition for the glass adhesive according to the present invention has excellent storage stability and has excellent workability by securing pot time. In addition, the primer composition for the glass adhesive has excellent adhesive force with glass, and thus it is suitable for fixing the glass of an automobile.

### [Best Mode]

Hereinafter, the present invention will be described in detail.

In the present invention, the "weight average molecular weight" of the resin can be measured by a method well known in the art, and for example, it can represent a value measured by the method of gel permeation chromatograph (GPC) .

In addition, in this specification, the term "(meth)acryl" means "acryl" and/or "methacryl" and the term "(meth)acrylate" means "acrylate" and/or "methacrylate."

The primer composition for the glass adhesive according to the present invention comprises a first silane polymer, a second silane polymer, an epoxy resin, and an acrylic polymer.

### First silane polymer

The first silane polymer serves to impart adhesiveness to the substrate and glass, which are attachment surfaces for the prepared coating.

The first silane polymer may be prepared from a first silane composition including epoxy silane and amino silane. Specifically, the first silane polymer may be prepared by reacting the first silane composition containing epoxy silane and amino silane at 40 to 60 °C for 20 to 50 hours.

In this case, the epoxy silane may be, for example, glycidoxyC₁₋₅ alkyl C₁₋₅ alkoxy silane, and specifically, may be glycidoxyC₁₋₅ alkyltriC₁₋₅ alkoxy silane. Specifically, the epoxy silane may be, but is not limited to, glycidoxymethyltrimethoxy silane, glycidoxyethyltrimethoxy silane, glycidoxypropyltrimethoxysilane, glycidoxymethyltriethoxy silane, glycidoxyethyltriethoxy silane, glycidoxypropyltriethoxy silane, glycidoxymethyltripropoxy silane, glycidoxyethyltripropoxy silane, glycidoxypropyltripropoxy silane or the like.

In addition, the amino silane may be, for example, a silane containing one or more amino groups, and specifically, a silane containing two or more amino groups. Specifically, the amino silane may be aminoC₁₋₅ alkyl-triC₁₋₅ alkoxy silane, and for example, may be, but is not limited to, aminomethyl-trimethoxy-silane, aminoethyl-trimethoxy-silane, aminopropyl-trimethoxy-silane, aminoethyl-aminopropyl-trimethoxy-silane and the like.

The first silane composition may comprise a first solvent, and the first solvent may be methylethylketone, ethyl acetate, dimethyl carbonate, n-butanol, and the like. In addition, the first silane composition may comprise 80% by weight or less, or 60 to 80% by weight of the first solvent based on the total weight.

The first silane composition may comprise epoxy silane and amino silane in a weight ratio of 1: 0.1 to 0.9, or 1: 0.3 to 0.7.

In addition, the first silane polymer may have an epoxy equivalent (EEW) of 2,000 to 15,000 g/eq, or 3,000 to 13,000 g/eq, and a weight average molecular weight (Mw) of 500 to 3,000 g/mol, or 1,000 to 3,000 g/mol. If the epoxy equivalent and the weight average molecular weight of the first silane polymer are within the above ranges, there is an effect that the storage property and adhesiveness are excellent.

The weight average molecular weight (Mw) of the first silane polymer may be smaller than the weight average molecular weight (Mw) of a second silane polymer to be described later. In this case, the adhesiveness, storage property and the like can be improved. On the other hand, if the weight average molecular weight (Mw) of the first silane polymer is greater than the weight average molecular weight (Mw) of the second silane polymer, a large number of side reactions occur and thus the storage property and adhesiveness may be reduced.

The first silane polymer may be contained in the composition in a content of 10 to 60 parts by weight, or 30 to 50 parts by weight relative to 0.1 to 20 parts by weight of the second silane polymer. If the content of the first silane polymer is within the above range, there is an effect that the storage property and adhesiveness are excellent.

In addition, the first silane polymer and the second silane polymer to be described later may be contained in the composition in a weight ratio of 1:0.1 to 0.5. Specifically, the first silane polymer and the second silane polymer may be contained in the composition in a weight ratio of 1:0.15 to 0.30, or 1:0.17 to 0.25. If the first silane polymer and the second silane polymer are contained in the composition in a weight ratio within the above range, there is an effect that the adhesiveness is excellent.

### Second silane polymer

The second silane polymer serves to impart adhesiveness to the substrate and glass, which are attachment surfaces for the prepared coating.

The second silane polymer may be prepared from a second silane composition comprising mercaptosilane, amino silane and an isocyanate compound. Specifically, the second silane polymer may be prepared by reacting the second silane composition comprising mercaptosilane, amino silane, and an isocyanate compound at 40 to 60 °C for 5 to 20 hours.

In this case, the mercaptosilane may be, for example, mercapto C₁₋₅ alkyl C₁₋₅ alkoxysilane, and specifically, may be mercaptoC₁₋₅ alkyltriC₁₋₅ alkoxy silane. Specifically, the mercapto silane may be, but is not limited to, mercaptomethyltrimethoxy silane, mercaptoethyltrimethoxy silane, mercaptopropyltrimethoxy silane, mercaptomethyltriethoxy silane, mercaptoethyltriethoxy silane, mercaptopropyltriethoxy silane, mercaptomethyltripropoxy silane, mercaptoethyltripropoxy silane, mercaptopropyltripropoxy silane and the like.

In addition, the amino silane may be, for example, a silane containing one or more amino groups, and specifically, may be a silane containing one amino group. For example, the amino silane may be C₆₋₁₀ aryl amino C₁₋₅ alkyl-triC₁₋₅ alkoxy silane, and for example, may be, but is not limited to, phenylaminomethyltrimethoxy silane, phenylaminoethyltrimethoxy silane, phenylaminopropyltrimethoxy silane, phenylaminomethyltriethoxy silane, phenylaminoethyltriethoxy silane, phenylaminopropyltriethoxy silane and the like.

The isocyanate compound may be a compound containing one or more isocyanate groups, and for example, may be a compound containing two or more or three or more isocyanate groups. Specifically, the isocyanate compound may have an unreacted isocyanate content (NCO%) of 5 to 20 wt.%, or 8 to 15 wt.%, but is not limited thereto.

The second silane composition may comprise a second solvent, and the second solvent may be, but is not limited to, methylethylketone, ethyl acetate, dimethyl carbonate, n-butanol, and the like. In addition, the second silane composition may contain 70% by weight or less, or 30 to 70% by weight of the second solvent based on the total weight.

The second silane composition may contain mercaptosilane, amino silane, and isocyanate compound in a weight ratio of 1:0.01 to 0.9:1 to 5, or 1:0.05 to 0.5:2 to 4.

In addition, the second silane polymer may have a weight average molecular weight (Mw) of 3,000 to 15,000 g/mol, or 5,000 to 10,000 g/mol, and a number average molecular weight (Mn) of 2,000 to 5,000 g/mol, or 3,000 to 4,000 g/mol. If the weight average molecular weight and the number average molecular weight of the second silane polymer are within the above ranges, there is an effect that the storage property and adhesiveness are excellent.

The second silane polymer may be contained in the composition in a content of 0.1 to 20 parts by weight, 1 to 15 parts by weight, or 7 to 15 parts by weight based on 10 to 60 parts by weight of the fist silane polymer. If the content of the second silane polymer is within the above range, there is an effect that the storage property and adhesiveness are excellent.

### Epoxy resin

The epoxy resin serves to impart tackiness and adhesiveness to the primer composition.

The epoxy resin is not particularly limited as long as it is usually used for a paint or a primer composition, and for example, may be a bisphenol type epoxy resin, an alicyclic epoxy resin, an aliphatic chain epoxy resin, a phenol novolac type epoxy resin, a cresol novolac type epoxy resin, a diglycidyl ether of biphenol, a diglycidyl ether of naphthalenediol, a diglycidyl ether of phenols, a diglycidyl ether of alcohols, a polyfunctional epoxy resin, a heterocyclic containing epoxy resin and the like. Specifically, the epoxy resin may be at least one selected from the group consisting of a bisphenol A type epoxy resin, a bisphenol F type epoxy resin, a bisphenol S type epoxy resin, and a bisphenol A novolac type epoxy resin.

In addition, the epoxy resin may have a weight average molecular weight (Mw) of 500 g/mol or less, or 300 to 400 g/mol. If the weight average molecular weight of the epoxy resin is within the above range, the storage property may be excellent.

The epoxy resin may have an epoxy equivalent (EEW) of 100 to 300 g/eq, or 160 to 200 g/eq. If the epoxy equivalent of the epoxy resin is within the above range, there is an effect that the storage property is excellent.

The epoxy resin may have a viscosity of 8,000 to 20,000 cps, or 10,000 to 15,000 cps at 25 °C. If the viscosity of the epoxy resin is within the above range, there is an effect that the storage property is excellent.

The epoxy resin may have a specific gravity of 0.8 to 1.5, or 1.0 to 1.3 at 20°C. If the specific gravity of the epoxy resin at 20°C is within the above range, there is an effect that the storage property is excellent.

The epoxy resin may be contained in the composition in an amount of 0.1 to 10 parts by weight, or 1 to 5 parts by weight for the first silane polymer of 10 to 60 parts by weight. If the content of the epoxy resin is within the above range, the storage property and adhesiveness are excellent.

### Acrylic polymer

The acrylic polymer serves to impart coating formability and adhesiveness to the primer composition.

The acrylic polymer may be directly synthesized according to a known method, or a commercially available product may be used. In this case, the acrylic polymer, for example, may be prepared by polymerizing an acrylic composition comprising an alkyl group containing (meth)acrylate monomer and a hydroxyl group and an aromatic ring containing (meth)acrylate monomer.

Specifically, the acrylic polymer may be prepared by polymerizing an acrylic composition comprising a C₁₋₃ alkyl group containing (meth)acrylate monomer, a C₄₋₁₀ alkyl group containing (meth)acrylate monomer and a hydroxyl group and C₆₋₁₂ aromatic ring containing (meth) acrylate. For example, the acrylic composition may contain a C₁₋₃ alkyl group containing (meth)acrylate monomer, a C₄₋₁₀ alkyl group containing (meth)acrylate monomer and a hydroxyl group and C₆₋₁₂ aromatic ring containing (meth)acrylate in a weight ratio of 1: 0.1 to 5: 0.01 to 1, or 1: 0.5 to 2: 0.1 to 0.5. If the weight ratio range is satisfied, coating formability and adhesiveness may be improved.

More specifically, the acrylic polymer may be prepared by polymerizing the acrylic composition at 60 to 100 °C for 5 to 20 hours.

The acrylic composition may comprise a solvent, and in this case, the solvent may be methylethylketone, ethyl acetate, dimethyl carbonate, n-butanol, or the like. In addition, the acrylic composition may contain 80% by weight or less, or 60 to 80% by weight of the solvent based on the total weight.

In addition, the acrylic composition may further comprise an epoxy group containing (meth)acrylate monomer. In this case, the epoxy group containing (meth)acrylate monomer may be, for example, glycidyl (meth)acrylate, methyl glycidyl acrylate, or the like.

The acrylic polymer may have a weight average molecular weight (Mw) of 150,000 to 250,000 g/mol, 170,000 to 220,000 g/mol, or 180,000 to 200,0000 g/mol, a glass transition temperature (Tg) of 30 to 70 °C, 40 to 60 °C, or 45 to 55 °C, and a viscosity of 200 to 1,500 cps, 400 to 1,000 cps, or 600 to 850 cps at 25 °C. If the weight average molecular weight, the glass transition temperature, and the viscosity of the acrylic polymer at 25 °C are within the above ranges, there is an effect that the adhesiveness and workability are excellent.

In addition, the acrylic polymer may be contained in the composition in a content of 5 to 30 parts by weight, or 10 to 20 parts by weight relative to the first silane polymer of 10 to 60 parts by weight. If the content of the acrylic polymer is within the above range, it may have excellent adhesiveness and workability.

### Additive

The primer composition may further comprise one or more additives such as a storage stabilizer, a solvent, a dispersant, and a moisture absorbent to improve the physical properties of the coating.

In this case, the additive may be contained in the composition in a content of 10 to 50 parts by weight, 25 to 45 parts by weight, or 30 to 40 parts by weight relative to the first silane polymer of 10 to 60 parts by weight.

The storage stabilizer plays a role in improving the stability of the primer composition. In this case, the storage stabilizer is not particularly limited as long as it can be added to the general primer composition for glass, and for example, may be, but is not limited to, a dialkylmalonic acid such as dimethylmalonic acid, diethylmalonic acid, or diisopropylmalonic acid. In addition, the storage stabilizer may be contained in the composition in an amount of 0.1 to 5 parts by weight, or 0.1 to 3 parts by weight relative to the first silane polymer of 10 to 60 parts by weight.

The solvent plays a role in controlling the viscosity and dryness of the composition. In this case, the solvent is not particularly limited as long as it can be added to the general primer composition for glass, and for example, may be aromatic hydrocarbons such as toluene and xylene, aliphatic hydrocarbons such as hexane, octane, and isoparaffin, ketones such as acetone, methylethylketone, and methylisobutyl ketone, acetates such as ethyl acetate and isobutyl acetate, ethers such as diisopropyl ether and 1,4-dioxane, carbonates such as dimethyl carbonate and diethyl carbonate, or the like. In addition, the solvent may be contained in the composition at a content of 5 to 60 parts by weight, or 10 to 40 parts by weight relative to the first silane polymer of 10 to 60 parts by weight.

Hereinafter, the present invention will be described in more detail through examples. However, these examples are only for helping the understanding of the present invention, and the scope of the present invention is not limited to these examples in any sense.

### [Example]

### Synthesis Example 1. Preparation of first silane polymer

To a reaction vessel, 3 parts by weight of N-(beta-aminoethyl)-gamma-aminopropyl-trimethoxy-silane, 10 parts by weight of gamma-glycidoxypropyltrimethoxysilane, 10 parts by weight of methylethylketone, 15 parts by weight of dimethyl carbonate and 1 part by weight of n-butanol were added, and reacted at 60 °C for 48 hours to prepare a first silane polymer.

The prepared first silane polymer had an epoxy equivalent (EEW) of 3,500 g/eq and a weight average molecular weight (Mw) of 2,800 g/mol.

### Synthesis Example 2. Preparation of second silane polymer-1

To a reaction vessel, 4 parts by weight of ethyl acetate, 0.01 parts by weight of tin catalyst (stannous octoate, T-9), 1 part by weight of (3-mercaptopropyl) trimethoxysilane, 1 part by weight of 2-hydroxy-3-phenoxypropylacrylate(HPPA), 0.1 parts by weight of N-phenyl-3-aminopropyltrimethoxysilane, and 3 parts by weight of isocyanate compound (manufacturer: Bayer, product name: Desmodur HL) were added, and reacted at 60 °C for 5 hours to prepare a second silane polymer-1.

The prepared second silane polymer-1 had a content of unreacted NCO groups (NCO%) of 0.1 wt.% or less, a weight average molecular weight (Mw) of 7,600 g/mol, and a number average molecular weight (Mn) of 3,600 g/mol.

### Synthesis Example 3. Preparation of second silane polymer-2

A second silane polymer-2 was prepared in the same way as in Synthesis Example 2, except that as a monomer, 1 part by weight of (3-mercaptopropyl) trimethoxysilane, 0.3 parts by weight of N-phenyl-3-aminopropyltrimethoxysilane, and 4 parts by weight of isocyanate compound were used.

The prepared second silane polymer-2 had a content of unreacted NCO groups (NCO%) of 0.1 wt.% or less, a weight average molecular weight (Mw) of 8,000 g/mol, and a number average molecular weight (Mn) of 3,800 g/mol.

### Synthesis Example 4. Preparation of second silane polymer-3

A second silane polymer-3 was prepared in the same way as in Synthesis Example 2, except that as a monomer, 1.1 parts by weigh of (3-mercaptopropyl) trimethoxysilane and 3 parts by weight of isocyanate compound were used, and N-phenyl-3-aminopropyltrimethoxysilane was not used.

The prepared second silane polymer-3 had a content of unreacted NCO groups (NCO%) of 0.1 wt.% or less, a weight average molecular weight (Mw) of 7,600 g/mol, and a number average molecular weight (Mn) of 3,600 g/mol.

### Synthesis Example 5. Preparation of second silane polymer-4

A second silane polymer-4 was prepared in the same way as in Synthesis Example 2, except that as a monomer, 1.1 parts by weight of N-phenyl-3-aminopropyltrimethoxysilane and 3 parts by weight of isocyanate compound were used, and (3-mercaptopropyl) trimethoxysilane was not used.

The prepared second silane polymer-4 had a content of unreacted NCO groups (NCO%) of 1.0 wt.% or less, a weight average molecular weight (Mw) of 7,000 g/mol, and a number average molecular weight (Mn) of 2,800 g/mol.

### Synthesis Example 6. Preparation of second silane polymer-5

A second silane polymer-5 was prepared in the same way as in Synthesis Example 2, except that as a monomer, 0.1 parts by weight of (3-mercaptopropyl) trimethoxysilane, 0.05 parts by weight of N-phenyl-3-aminopropyltrimethoxysilane, and 0.8 parts by weight of isocyanate compound were used, and 0.5 parts by weight of ethyl acetate, 0.001 parts by weight of tin catalyst, and 0.3 parts by weight of 2-hydroxy-3-phenoxypropylacrylate were used.

The prepared second silane polymer-5 had a content of unreacted NCO groups (NCO%) of 1.0 wt.% or less, a weight average molecular weight (Mw) of 7,200 g/mol, and a number average molecular weight (Mn) of 2,800 g/mol.

### Synthesis Example 7. Preparation of acrylic polymer-1

To a reaction vessel, 13 parts by weight of methylethylketone, 2 parts by weight of methyl methacrylate (MMA), 2 parts by weight of butyl methacrylate(BMA), 0.5 parts by weight of 2-hydroxy-3-phenoxypropylacrylate(HPPA) and 0.05 parts by weight of tert-butyl peroxide were added, and reacted at 80°C for 12 hours to prepare an acrylic polymer-1.

The prepared acrylic polymer-1 had a weight average molecular weight (Mw) of 200,000 g/mol, a glass transition temperature (Tg) of 48.1 °C, and a viscosity of 800 cps at 25 °C.

### Synthesis Example 8. Preparation of acrylic polymer-2

An acrylic polymer-2 was prepared in the same manner as in Synthesis Example 7, except that to a reaction vessel, 11.55 parts by weight of methylethylketone, 2 parts by weight of methyl methacrylate, 2 parts by weight of butyl methacrylate, 1 part by weight of 2-hydroxy-3-phenoxypropylacrylate, 0.9 parts by weight of glycidyl methacrylate, and 0.1 parts by weight of tert-butyl peroxide were added.

The prepared acrylic polymer-2 had a weight average molecular weight (Mw) of 200,000 g/mol, a glass transition temperature (Tg) of 46.1 °C, and a viscosity of 800 cps at 25 °C.

### Synthesis Example 9. Preparation of acrylic polymer-3

An acrylic polymer-3 was prepared in the same manner as in Synthesis Example 7, except that to a reaction vessel, 11.65 parts by weight of methylethylketone, 2 parts by weight of methyl methacrylate as a monomer, 2 parts by weight of butyl methacrylate, 1 part by weight of 2-hydroxy-3-phenoxypropylacrylate, 0.8 parts by weight of glycidyl methacrylate, and 0.1 parts by weight of tert-butyl peroxide were added.

The prepared acrylic polymer-3 had a weight average molecular weight (Mw) of 200,000 g/mol, a glass transition temperature (Tg) of 47.2 °C, and a viscosity of 700 cps at 25 °C.

### Synthesis Example 10. Preparation of third silane polymer

A third silane polymer was prepared in the same manner as in Synthesis Example 1, except that it was reacted at 60 °C for 60 hours.

The prepared tertiary silane polymer had an epoxy equivalent (EEW) of 4,500 g/eq, and a weight average molecular weight (Mw) of 3,500 g/mol.

### Example 1. Preparation of primer composition

To a reaction vessel, 39 parts by weight of the first silane polymer of Synthesis Example 1, 9.11 parts by weight of the second silane polymer-1 of Synthesis Example 2, 17.55 parts by weight of the acrylic polymer-1 of Synthesis Example 7, 3 parts by weight of an epoxy resin-1, 0.55 parts by weight of a storage stabilizer, 17 parts by weight of a solvent-1 and 13.79 parts by weight of a solvent-2 were added, and stirred for 20 minutes at 600 rpm using a highspeed stirrer to prepare a primer composition.

### Examples 2 to 11 and Comparative Examples 1 to 7.

A primer composition was prepared in the same manner as in Example 1, except that the contents of each component described in Tables 1 and 2 were used.

**Table 1:**

| Component (part by weight) | | Exam ple 1 | Exam ple 2 | Exam ple 3 | Exam ple 4 | Exam ple 5 | Exam ple 6 | Exam ple 7 | Exam ple 8 | Exam ple 9 | Exam ple 10 | Examp le 11 |
|---|---|---|---|---|---|---|---|---|---|---|---|---|
| First silane polymer | | 39 | 45 | 26 | 58 | 15 | 39 | 39 | 39 | 39 | 39 | 39 |
| Second Silane polymer | 1 | 9.11 | 8 | 19 | 6 | 20 | - | - | - | 9.11 | 9.11 | - |
| | 2 | - | - | - | - | - | 9.11 | - | - | - | - | - |
| | 3 | - | - | - | - | - | - | 9.11 | - | - | - | - |
| | 4 | - | - | - | - | - | - | - | 9.11 | - | - | - |
| | 5 | - | - | - | - | - | - | - | - | - | - | 1.75 |
| Epoxy resin | 1 | 3 | 2 | 10 | 1 | 10 | 3 | 3 | 3 | - | 3 | 2 |
| | 2 | - | - | - | - | - | - | - | - | 3 | - | - |
| Acrylic polymer | 1 | 17.5 5 | 15 | 10 | 7 | 27 | 17.5 5 | 17.5 5 | 17.5 5 | 14.5 5 | - | - |
| | 2 | - | - | - | - | - | - | - | - | - | 17.5 5 | - |
| | 3 | - | - | - | - | - | - | - | - | - | - | 17.55 |
| Storage stabilizer | | 0.55 | 1 | 1 | 1 | 1 | 0.55 | 0.55 | 0.55 | 0.55 | 0.55 | 0.6 |
| Solvent | 1 | 17 | 18 | 24 | 17 | 17 | 17 | 17 | 17 | 19 | 17 | 14.80 |
| | 2 | 13.7 9 | 11 | 10 | 10 | 10 | 13.7 9 | 13.7 9 | 13.7 9 | 14.7 9 | 13.7 9 | 16 |
| Moisture absorbent | | - | - | - | - | - | - | - | - | - | - | 0.3 |
| Dispersant | | - | - | - | - | - | - | - | - | - | - | 1 |
| Carbon black | | - | - | - | - | - | - | - | - | - | - | 7 |
| Total | | 100 | 100 | 100 | 100 | 100 | 100 | 100 | 100 | 100 | 100 | 100 |

**Table 2:**

| Component (part by weight) | Compara tive Example 1 | Compara tive Example 2 | Compara tive Example 3 | Compara tive Example 4 | Compara tive Example 5 | Compara tive Example 6 | Compara tive Example 7 |
|---|---|---|---|---|---|---|---|
| First silane polymer-1 | 39 | 39 | - | 35 | 40 | 50 | - |
| Third silane polymer | - | - | - | - | - | - | 39 |
| Second silane polymer-1 | 0.01 | 24.11 | 20 | - | 10 | 13 | 9.11 |
| Epoxy resin-1 | 3 | 3 | 10 | 5 | - | 5 | 3 |
| Acrylic polymer-1 | 14.55 | 12.55 | 30 | 20 | 20 | - | 17.55 |
| Storage stabilizer | 0.55 | 0.55 | 1 | 1 | 1 | 1 | 0.55 |
| Solvent-1 | 21.5 | 11 | 26 | 26 | 18 | 19 | 17 |
| Solvent-2 | 21.39 | 9.79 | 13 | 13 | 11 | 12 | 13.79 |
| Total | 100 | 100 | 100 | 100 | 100 | 100 | 100 |

Table 3 below shows manufacturers and product names of each component used in Comparative Examples and Examples.

**Table 3:**

| Component | Compound name, or manufacturer and product name |
|---|---|
| Epoxy resin-1 | Bisphenol A type epoxy resin (manufacturer: Kukdo Chemical, product name: YD-128) (EEW: 184~190g/eq, Viscosity at 25 °C: 12,500cps, Specific gravity at 20 °C: 1.17) |
| Epoxy resin-2 | Bisphenol A type epoxy resin (manufacturer: KCC, product name: CNE00105) (EEW: 1200g/eq) |
| Storage stabilizer | diethyl malonate |
| Solvent-1 | ethyl acetate |
| Solvent-2 | diethyl carbonate |
| Moisture absorbent | sodium/calcium aluminosilicate |
| Dispersant | hyperbranched polyester (manufacturer: BYK, product name: BYK-2152) |

### Experimental example: Evaluation of physical properties

After preparing specimens from the primer compositions of Examples and Comparative Examples by a method based on the HMC standard (MS715-25), physical properties were measured in the following manner, and the results are shown in Table 4 below.

### (1) Adhesiveness

The composition was applied to the painting surface at 120 mm (length) X 10 mm (width) X 5 mm (thickness) and cured at 20 °C and 65 % relative humidity for 7 days to form a primer layer. Thereafter, the primer layer on one end of the test piece was cut with a 15 mm knife, and the substrate of the painting was held with one hand and peeled off using a knife at an angle of 30°. After curing, the adhesiveness was evaluated by calculating the area of the adhesive where the primer was not peeled off (interface peeled off between primer layer and adhesive) from the total area of the adhesive layer in %. In this case, the adhesiveness was evaluated to be better as the attached area was higher.

### (2) Storage property

After measuring the viscosity with Podcup No. 4 at 20 °C, the viscosity was measured again after storage at 60 °C for 10 days. Thereafter, the viscosity change rate (%) was calculated based on the initial viscosity, and as for the evaluation criteria, if the viscosity change rate (%) was less than 10%, it was evaluated as excellent, if it was 10 to 20%, it was evaluated as good, and if it was more than 20%, it was evaluated as poor.

### (3) Pot time

The compositions of Examples or Comparative Examples are applied to a glass surface with an application area of 25 mm (width) X 150 mm (length) X 3 mm (height), and after standing for 110 hours at 20 °C and 65% relative humidity, a urethane sealant (manufacturer: KCC, product name: PU9510(S-P2P)) and adhesive (manufacturer: KCC, product name: PU9370-BTX) were pressed thereon to prepare a test piece.

When 7 days had elapsed at 20 °C and 65% relative humidity, the peel test of the test piece was conducted in the same manner as in item (1), and then the state of the adhesive interface was observed. The evaluation criteria are as follows:
- Excellent: cohesive failure of exceeding 90% in the sealant layer
- Good: cohesive failure of 30% or more and 90% or less in the sealant layer
- Poor: the sealant-primer layer interface is broken, and the cohesive failure of the sealant layer is less than 30%

### (4) Shear strength

The compositions were coated and cured for 7 days at 20 °C and 65% relative humidity to prepare a 5 mm thick dogbone-shaped specimen, and then the shear strength was measured with a UTM (Universal Testing Machine).

**Table 4:**

| | Adhesiveness (%) | Storage property | Pot time | Shear strength (Mpa) |
|---|---|---|---|---|
| Example 1 | 100 | excellent | excellent | 4.1 |
| Example 2 | 100 | excellent | good | 4.0 |
| Example 3 | 95 | good | excellent | 3.8 |
| Example 4 | 98 | excellent | good | 4.1 |
| Example 5 | 95 | excellent | good | 3.7 |
| Example 6 | 100 | excellent | excellent | 3.9 |
| Example 7 | 95 | excellent | excellent | 3.9 |
| Example 8 | 92 | excellent | excellent | 4 |
| Example 9 | 100 | poor | good | 4.1 |
| Example 10 | 100 | excellent | excellent | 4.1 |
| Example 11 | 100 | excellent | excellent | 4.1 |
| Comparative Example 1 | 90 | good | good | 3.4 |
| Comparative Example 2 | 95 | poor | good | 3.9 |
| Comparative Example 3 | 60 | excellent | poor | 2.8 |
| Comparative Example 4 | 90 | good | good | 3.4 |
| Comparative Example 5 | 95 | poor | good | 3.9 |
| Comparative Example 6 | 80 | good | good | 3.7 |
| Comparative Example 7 | 95 | poor | good | 3.8 |

As shown in Table 4, the compositions of Examples 1 to 11 were all excellent in adhesiveness, storage property, pot time, and shear strength.

On the other hand, Comparative Example 1 containing a small amount of the second silane polymer and Comparative Example 4 without the second silane polymer had insufficient shear strength. In addition, Comparative Example 2 containing an excess of the second silane polymer, Comparative Example 5 without epoxy resin, and Comparative Example 7 containing a third silane polymer having a greater weight average molecular weight than the second silane polymer were insufficient in storage property. In addition, Comparative Example 3 without the first silane polymer was insufficient in adhesiveness, pot time and shear strength. In addition, Comparative Example 6 without an acrylic polymer was insufficient in adhesiveness.

## Claims

1. A primer composition for a glass adhesive comprising,
a first silane polymer, a second silane polymer, an epoxy resin and an acrylic polymer,
wherein the first silane polymer has a smaller weight average molecular weight than the second silane polymer, and
wherein the composition comprises 10 to 60 parts by weight of the first silane polymer, 0.1 to 20 parts by weight of the second silane polymer, 0.1 to 10 parts by weight of the epoxy resin, and 5 to 30 parts by weight of the acrylic polymer.

2. The primer composition for the glass adhesive according to claim 1, wherein the first silane polymer is prepared from a first silane composition containing an epoxy silane and an amino silane and has an epoxy equivalent of 2,000 to 15,000 g/eq, and a weight average molecular weight of 500 to 3,000 g/mol.

3. The primer composition for the glass adhesive according to claim 1, wherein the second silane polymer is prepared from a second silane composition containing a mercaptosilane, an amino silane and an isocyanate compound.

4. The primer composition for the glass adhesive according to claim 1, wherein the epoxy resin has an epoxy equivalent of 100 to 300 g/eq, and a weight average molecular weight of 500 g/mol or less.

5. The primer composition for the glass adhesive according to claim 1, wherein the acrylic polymer is prepared by polymerizing an acrylic composition containing a (meth)acrylate monomer, and a hydroxyl group and aromatic ring containing (meth)acrylate monomer.

6. The primer composition for the glass adhesive according to claim 1, wherein the composition does not contain inorganic pigments and dispersants.
